# FASCICULE DE BREVET EUROPEEN

(11) **EP 0 568 445 B1**
(45) Date de publication et mention de la délivrance du brevet: **04.06.1997**
(21) Numéro de dépôt: 93401092.7
(22) Date de dépôt: 27.04.1993
(51) Int. Cl.: B60H 1/32

(54) **Procédé et dispositif pour abaisser la température de l'air dans l'habitacle d'un véhicule hors circulation**
Verfahren und Vorrichtung zur Absenkung der Lufttemperatur im Innenraum eines abgestellten Fahrzeugs
Process and device for lowering the air temperature of the interior of a parked vehicle

(30) Priorité: 28.04.1992 FR 9205243
(43) Date de publication de la demande: 03.11.1993
(73) Titulaire: VALEO CLIMATISATION, 78321 La Verrière (FR)
(72) Inventeur: Dauvergne, Jean, F-95470 Fosses (FR)
(74) Mandataire: Gamonal, Didier

(56) Documents cités:
- US-A- 4 776 179
- PATENT ABSTRACTS OF JAPAN, vol. 6, no. 86 (M-131)(964) 25 Mai 1982; & JP-A-57 022 909 (DIESEL KIKI K.K.)
- PATENT ABSTRACTS OF JAPAN, vol. 9, no. 220 (E-341)(1943) 6 Septembre 1985; & JP-A-60 078 813 (DIESEL KIKI K.K.)
- PATENT ABSTRACTS OF JAPAN, vol. 7, no. 9 (M-185)(1154) 14 Janvier 1983; & JP-A-57 167 814 (DIESEL KIKI K.K.)
- PATENT ABSTRACTS OF JAPAN, vol. 11, no. 28 (M-557)(2475) 27 Janvier 1987; & JP-A-61 200 022 (ATSUGI MOTOR PARTS)

## Description

L'invention concerne un procédé et un dispositif pour abaisser la température de l'air dans l'habitacle d'un véhicule hors circulation, c'est-à-dire lorsque le véhicule est en stationnement (voir JP-A-57-22999 à titre d'exemple).

Lorsqu'on laisse un véhicule inoccupé vitres fermées au soleil par temps chaud, la température de l'air à l'intérieur de celui-ci peut atteindre, par suite d'un effet de serre, une température sensiblement supérieure à la température extérieure, par exemple une température de 65°C pour une température extérieure de 45°C. Il est alors souhaitable, avant de reprendre place dans le véhicule, d'abaisser cette température intérieure.

L'utilisation directe, à cet effet, d'un appareil de climatisation en fonctionnement normal conduit à une dépense d'énergie considérable et à une mise en condition de confort, c'est-à-dire une température de l'ordre de 20°C, dans une période de temps assez longue.

Le but de l'invention est de permettre cet abaissement de température au moyen d'un appareil de climatisation en limitant la dépense d'énergie et dans un temps écourté.

L'invention vise un procédé pour abaisser la température de l'air dans l'habitacle d'un véhicule hors circulation au moyen d'un appareil de climatisation comprenant un compresseur de fluide réfrigérant, un ventilateur pour envoyer un courant d'air dans l'habitacle et un évaporateur pour transférer de la chaleur dudit courant d'air audit fluide réfrigérant, procédé dans lequel on détecte la température de l'air dans l'habitacle ou température intérieure et la température de l'air à l'extérieur de l'habitacle ou température extérieure et on commande l'appareil successivement selon les trois mode de fonctionnement suivants, en fonction des valeurs détectées :
a) le ventilateur est entraîné de façon à envoyer dans l'habitacle de l'air prélevé à l'extérieur, lorsque la température intérieure excède la température extérieure d'au moins un écart limite prescrit;
b) le compresseur est entraîné à un premier régime, lorsque la condition correspondant au mode de fonctionnement a) n'est pas satisfaite et que la température intérieure est supérieure à un seuil;
c) le compresseur est entraîné à un second régime impliquant une consommation d'énergie et une capacité d'échange de chaleur de l'évaporateur plus faibles que le premier régime, lorsqu'aucune des conditions correspondant aux modes de fonctionnement a) et b) n'est satisfaite.

Le mode de fonctionnement a) permet de ramener pratiquement la température intérieure au niveau de la température extérieure par un simple renouvellement de l'air dans l'habitacle, sans mettre en service le compresseur et par conséquent avec une dépense d'énergie réduite. Si la température ainsi obtenue est encore éloignée de la température finale souhaitée, le mode de fonctionnement b) permet de se rapprocher rapidement de celle-ci. Le premier régime peut se différencier du second régime par exemple par une vitesse de rotation instantanée supérieure, ou par un rapport cyclique plus élevé en fonctionnement intermittent.

Le mode de fonctionnement c) peut correspondre au fonctionnement normal de l'appareil de climatisation lorsque le véhicule est en circulation.

L'invention a également pour objet un dispositif pour la mise en oeuvre du procédé défini ci-dessus, comprenant un appareil de climatisation muni d'un compresseur de fluide réfrigérant, d'un ventilateur et d'un évaporateur, un capteur de température intérieure, un capteur de température extérieure et des moyens de commande propres à commander le ventilateur et le compresseur en fonction des signaux fournis par lesdits capteurs de façon à réaliser lesdits modes de fonctionnement a), b) et c).

Des caractéristiques optionnelles avantageuses du procédé et du dispositif selon l'invention sont énoncées ci-après :
- On envoie dans l'habitacle exclusivement de l'air extérieur dans le mode de fonctionnement a) et au moins en partie de l'air recirculé dans l'un au moins des modes de fonctionnement b) et c).
- On interrompt le fonctionnement de l'appareil lorsque le véhicule est toujours hors circulation à l'expiration d'une durée déterminée. Ceci évite un gaspillage d'énergie pour la climatisation lorsque le véhicule reste inoccupé plus longtemps que prévu.
- On entraîne le ventilateur à une première vitesse dans les modes de fonctionnement a) et b) et à une seconde vitesse inférieure à la première dans le mode de fonctionnement c).
- Ledit écart limite est d'environ 3°C.
- Ledit seuil est d'environ 25°C.
- Le dispositif comprend au moins un volet de recirculation propre à être déplacé par les moyens de commande de façon à envoyer dans l'habitacle soit exclusivement de l'air extérieur soit au moins en partie de l'air recirculé.
- Il comprend des moyens de temporisation propres à interrompre automatiquement le fonctionnement de l'appareil de climatisation à l'expiration d'une durée déterminée après son déclenchement.
- Il comprend des moyens de programmation propres à déclencher le fonctionnement de l'appareil de climatisation à une heure présélectionnée. On peut alors programmer l'abaissement de la température de l'air avant de quitter le véhicule.
- Il comprend des moyens de télécommande propres à déclencher le fonctionnement de l'appareil de climatisation à distance.
- Il comprend un moteur alimenté en basse tension pour l'entraînement du ventilateur et un moteur alimenté en haute tension pour l'entraînement du compresseur. Les termes "basse tension" et "haute tension" désignent respectivement une tension de l'ordre de 10 volts, par exemple de 12 volts, et une tension de plusieurs dizaines de volts, par exemple d'environ 50 volts ou 120 volts.
- Il est installé sur un véhicule à traction électrique et le moteur du compresseur est alimenté à partir de la batterie de traction.

D'autres caractéristiques et avantages de l'invention apparaîtront à l'examen de la description détaillée ci-après, et des dessins annexés, sur lesquels :
- la figure 1 est un schéma fonctionnel d'un dispositif selon l'invention ; et
- la figure 2 est un diagramme montrant l'évolution dans le temps de différents paramètres lors de la mise en oeuvre du procédé selon l'invention.

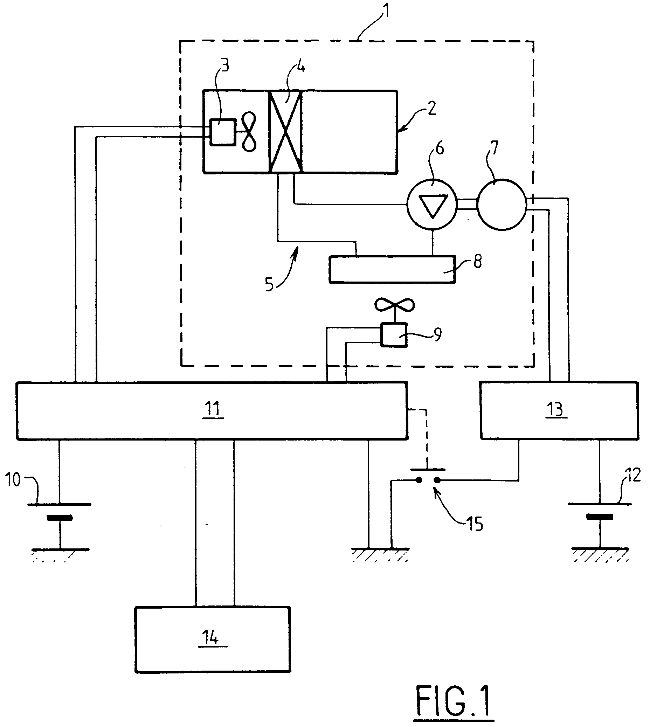

Le dispositif illustré à la figure 1, installé dans un véhicule à traction électrique, comprend un appareil de climatisation 1 comportant un boîtier 2 qui définit un circuit d'air non représenté en détail. Ce boîtier contient notamment un groupe moto-ventilateur 3 destiné à produire un courant d'air dans le circuit, et un évaporateur 4 disposé dans ce dernier. L'évaporateur 4 fait également partie d'un circuit de fluide réfrigérant 5 qui contient en outre notamment un compresseur 6 pouvant être entraîné par un moteur électrique 7, et un condenseur 8 associé à un groupe moto-ventilateur 9. Les groupes moto-ventilateurs 3 et 9 peuvent être alimentés par une batterie auxiliaire de 12 volts 10 par l'intermédiaire d'un circuit d'alimentation en basse tension 11, et le moteur 7 du compresseur peut être alimenté par la batterie de traction de 120 volts 12 par l'intermédiaire d'un circuit d'alimentation en haute tension 13. Le circuit d'alimentation 11 reçoit des signaux d'un boîtier de commande 14 de façon à faire varier dans le temps les conditions d'alimentation du groupe moto-ventilateur 3 et du moteur 7 du compresseur. Le boîtier 14 peut comprendre un récepteur de télécommande permettant une commande à distance du dispositif, et/ou des moyens de programmation permettant de fixer à l'avance l'heure de déclenchement de celui-ci.

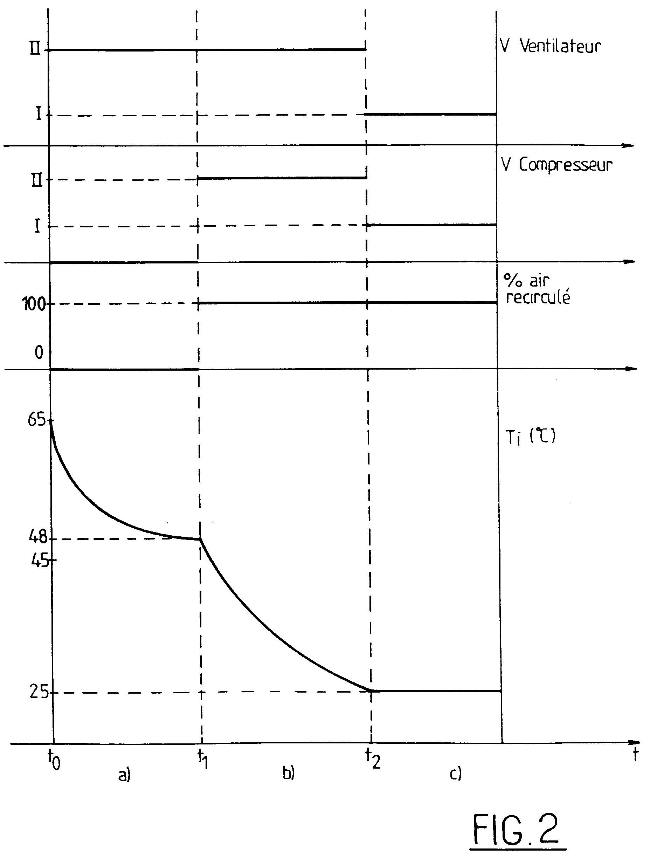

Le fonctionnement du dispositif, résultant des signaux fournis par le boîtier de commande 14, est expliqué ci-après en relation avec la figure 2. On suppose que la température Tᵢ de l'air à l'intérieur de l'habitacle est de 65°C à l'instant t₀ où le processus d'abaissement de cette température doit commencer. Le boîtier de commande compare cette température intérieure à la température extérieure Tₑ qui est par exemple de 45°C, ces deux températures étant fournies par des capteurs non représentés. La différence Tᵢ - Tₑ étant supérieure à 3°C, le boîtier 14 commande le circuit 11 de façon à faire fonctionner le dispositif selon le mode a) qui comporte la rotation du groupe moto-ventilateur 3 à une vitesse relativement grande indiquée par le chiffre II sur la première courbe en haut de la figure 2, et l'absence de rotation du compresseur 6 (seconde courbe de la figure 2). Un volet de recirculation, non représenté à la figure 1, du boîtier de climatisation 2 est commandé, le cas échéant par l'intermédiaire du circuit d'alimentation 11, de façon que l'air envoyé dans l'habitacle par le groupe moto-ventilateur 3 provienne exclusivement de l'extérieur (troisième courbe de la figure 2). L'air intérieur à 65°C est donc remplacé par de l'air extérieur à 45°C. Il en résulte tout d'abord une chute rapide de la température Tᵢ (voir courbe de variation de Tᵢ à la partie inférieure de la figure 2), la vitesse de variation se réduisant à mesure que Tᵢ s'approche de Tₑ = 45°C. À l'instant t₁ où l'écart Tᵢ - Tₑ n'est plus que de 3°C, cette vitesse de variation est devenue relativement faible. Le boîtier 14 commande alors le passage au mode de fonctionnement b) dans lequel le groupe moto-ventilateur 3 est alimenté de la même façon que dans le mode de fonctionnement a), et le moteur 7 est alimenté de façon à faire tourner le compresseur 6 à une vitesse relativement grande indiquée par le chiffre II sur la seconde courbe de la figure 2. L'alimentation du moteur 7 est permise par un interrupteur 15 qui commande l'alimentation du circuit à haute tension 13 et qui est lui-même commandé par le circuit à basse tension 11. Le volet de recirculation quant à lui passe dans la position correspondant à l'admission exclusive d'air recirculé, c'est-à-dire provenant de l'intérieur de l'habitacle du véhicule automobile. L'appareil de climatisation fonctionne alors de façon à produire un abaissement de la température Tᵢ le plus rapide possible. A l'instant t₂, Tᵢ atteint 25°C. L'appareil de climatisation passe alors au mode de fonctionnement c) qui correspond au fonctionnement normal lorsque le véhicule est occupé. Le ventilateur et le compresseur tournent à des vitesses réduites indiquées par le chiffre I à la figure 2, et le volet de recirculation reste positionné de façon à faire circuler dans le boîtier 2 100% d'air recirculé. Lorsque les passagers regagnent le véhicule, ils trouvent l'air à l'intérieur de l'habitacle à une température agréable.

En outre, si, au terme d'un délai d'environ 30 mn, le véhicule est toujours hors circulation, le fonctionnement de l'appareil est arrêté.

Bien entendu, lorsque le compresseur 6 fonctionne, le moto-ventilateur 9 du condenseur 8 est alimenté par le circuit en basse tension 11 de façon à évacuer la chaleur dégagée par le condenseur.

Le procédé et le dispositif selon l'invention peuvent être également utilisés sur un véhicule à moteur thermique, dans des zones de stationnement où des sources de haute tension sont disponibles. La batterie à haute tension 12, qui n' existe pas à bord du véhicule, est alors remplacée par des moyens de raccordement du circuit 13 à une telle source.

## Revendications

1. Procédé pour abaisser la température de l'air dans l'habitacle d'un véhicule hors circulation au moyen d'un appareil de climatisation (1) comprenant un compresseur (6) de fluide réfrigérant, un ventilateur (3) pour envoyer un courant d'air dans l'habitacle et un évaporateur (4) pour transférer de la chaleur dudit courant d'air audit fluide réfrigérant, procédé dans lequel on détecte la température de l'air dans l'habitacle ou température intérieure et la température de l'air à l'extérieur de l'habitacle ou température extérieure et on commande l'appareil successivement selon les trois mode de fonctionnement suivants, en fonction des valeurs détectées :
a) le ventilateur est entraîné de façon à envoyer dans l'habitacle de l'air prélevé à l'extérieur, lorsque la température intérieure (Tᵢ) excède la température extérieure (Tₑ) d'au moins un écart limite prescrit;
b) le compresseur est entraîné à un premier régime (II), lorsque la condition correspondant au mode de fonctionnement a) n'est pas satisfaite et que la température intérieure est supérieure à un seuil;
c) le compresseur est entraîné à un second régime (I) impliquant une consommation d'énergie et une capacité d'échange de chaleur de l'évaporateur plus faibles que le premier régime, lorsqu'aucune des conditions correspondant aux modes de fonctionnement a) et b) n'est satisfaite.

2. Procédé selon la revendication 1, caractérisé en ce qu'on envoie dans l'habitacle exclusivement de l'air extérieur dans le mode de fonctionnement a) et au moins en partie de l'air recirculé dans l'un au moins des modes de fonctionnement b) et c).

3. Procédé selon l'une des revendications 1 et 2, caractérisé en ce qu'on interrompt le fonctionnement de l'appareil lorsque le véhicule est toujours hors circulation à l'expiration d'une durée déterminée.

4. Procédé selon l'une des revendications précédentes, caractérisé en ce qu'on entraîne le ventilateur à une première vitesse (II) dans les modes de fonctionnement a) et b) et à une seconde vitesse (I) inférieure à la première dans le mode de fonctionnement c).

5. Procédé selon l'une des revendications précédentes, caractérisé en ce que ledit écart limite est d'environ 3°C.

6. Procédé selon l'une des revendications précédentes, caractérisé en ce que ledit seuil est d'environ 25°C.

7. Dispositif pour la mise en oeuvre du procédé selon l'une des revendications précédentes, comprenant un appareil de climatisation (1) muni d'un compresseur (6) de fluide réfrigérant, d'un ventilateur (3) et d'un évaporateur (4), un capteur de température intérieure, un capteur de température extérieure et des moyens de commande (11,13,14) propres à commander le ventilateur et le compresseur en fonction des signaux fournis par lesdits capteurs de façon à réaliser lesdits modes de fonctionnement a), b) et c).

8. Dispositif selon la revendication 7, caractérisé en ce qu'il comprend au moins un volet de recirculation propre à être déplacé par les moyens de commande de façon à envoyer dans l'habitacle soit exclusivement de l'air extérieur soit au moins en partie de l'air recirculé.

9. Dispositif selon l'une des revendications 7 et 8, caractérisé en ce qu'il comprend des moyens de temporisation propres à interrompre automatiquement le fonctionnement de l'appareil de climatisation à l'expiration d'une durée déterminée après son déclenchement.

10. Dispositif selon l'une des revendications 7 à 9, caractérisé en ce qu'il comprend des moyens de programmation propres à déclencher le fonctionnement de l'appareil de climatisation à une heure présélectionnée.

11. Dispositif selon l'une des revendications 7 à 10, caractérisé en ce qu'il comprend des moyens de télécommande propres à déclencher le fonctionnement de l'appareil de climatisation à distance.

12. Dispositif selon l'une des revendications 7 à 11, caractérisé en ce qu'il comprend un moteur alimenté en basse tension pour l'entraînement du ventilateur et un moteur (7) alimenté en haute tension pour l'entraînement du compresseur.

13. Dispositif selon l'une des revendications 7 à 12, caractérisé en ce qu'il est installé sur un véhicule à traction électrique et que le moteur du compresseur est alimenté à partir de la batterie de traction.

## Claims

1. A method of reducing the temperature of the air in the cabin of a stationary vehicle, by means of an air conditioning apparatus (1) comprising a compressor (6) for refrigerant fluid, a fan (3) for delivering a stream of air into the cabin, and an evaporator (4) for transferring heat from the said stream of air to the said refrigerant fluid, in which method the temperature of the air, or internal temperature, in the cabin and the temperature of the air, or external temperature, outside the cabin, are detected, and the apparatus is controlled successively in the following operating modes as a function of the detected values of temperature:
(a) the fan is so driven as to deliver into the cabin air drawn from outside when the internal temperature (Tᵢ) exceeds the external temperature (Tₑ) by at least a predetermined limiting amount;
(b) the compressor is driven in a first regime (II), when the conditions for operating mode (a) are not satisfied and the internal temperature is greater than a threshold value;
(c) the compressor is driven in a second regime (I), involving an energy consumption and a heat exchange capacity of the evaporator which are smaller than in the first regime, when no condition corresponding to operating modes (a) and (b) is satisfied.

2. A method according to Claim 1, characterised in that the air delivered into the cabin consists exclusively of air from outside in operating mode (a), and consists at least partly of recirculated air in at least one of the operating modes (b) and (c).

3. A method according to Claim 1 or Claim 2, characterised in that operation of the apparatus is interrupted when the vehicle is still stationary after a predetermined period of time.

4. A method according to one of the preceding Claims, characterised in that the fan is driven at a first speed (II) in operating modes (a) and (b), and at a second speed (I), slower than the first speed, in operating mode (c).

5. A method according to one of the preceding Claims, characterised in that the said limiting amount is about 3°C.

6. A method according to one of the preceding Claims, characterised in that the said threshold value is about 25°C.

7. Apparatus for performing the method in accordance with one of the preceding Claims, comprising an air conditioning apparatus (1) having a compressor (6) for refrigerant fluid, a fan (3) and an evaporator (4), an internal temperature sensor, an external temperature sensor, and control means (11, 13, 14) for controlling the fan and the compressor as a function of signals supplied by the said sensors, whereby to perform the said operating modes (a), (b) or (c).

8. Apparatus according to Claim 7, characterised in that it includes at least one recirculating valve, which is adapted to be displaced by the control means in such a way as to deliver into the cabin either air from outside exclusively, or air which consists at least partly of recirculated air.

9. Apparatus according to Claim 7 or Claim 8, characterised in that it includes timing means adapted to interrupt the operation of the air conditioning apparatus automatically at the end of a predetermined time after it has been started.

10. Apparatus according to one of Claims 7 to 9, characterised in that it includes programming means adapted to start the operation of the air conditioning apparatus at a preselected time.

11. Apparatus according to one of Claims 7 to 10, characterised in that it includes wireless remote control means adapted to start the operation of the air conditioning apparatus from a distance.

12. Apparatus according to one of Claims 7 to 11, characterised in that it includes a low-voltage motor for driving the fan, and a high-voltage motor (7) for driving the compressor.

13. Apparatus according to one of Claims 7 to 12, characterised in that it is installed in an electrically propelled vehicle, and in that the motor of the compressor is supplied with power from the traction battery.

## Patentansprüche

1. Verfahren zur Absenkung der Lufttemperatur im Innenraum eines abgestellten Fahrzeugs anhand einer Klimaanlage (1) mit einem Kältemittelkompressor (6), einem Ventilator (3) zur Beförderung eines Luftstroms in den Fahrzeuginnenraum und einem Verdampfer (4) für die Übertragung der Wärme des besagten Luftstroms an das besagte Kältemittel, wobei die Lufttemperatur im Fahrzeuginnenraum oder Innentemperatur und die Lufttemperatur außerhalb des Innenraums oder Außentemperatur erfaßt werden und die Klimaanlage anschließend in Abhängigkeit von den erfaßten Werten nach den folgenden drei Betriebsarten gesteuert wird:
a) der Ventilator wird so angetrieben, daß er außen aufgenommene Luft in den Innenraum befördert, wenn die Innentemperatur (Tᵢ) die Außentemperatur (Tₑ) um mindestens eine vorgegebene Grenzabweichung übersteigt;
b) der Kompressor wird mit einer ersten Drehzahl (II) angetrieben, wenn die Bedingung für die Betriebsart a) nicht erfüllt ist und wenn die Innentemperatur über einem Schwellenwert liegt;
c) der Kompressor wird mit einer zweiten Drehzahl (I) angetrieben, die einen geringeren Energieverbrauch und eine geringere Wärmeaustauschleistung als bei der ersten Drehzahl bedingt, wenn keine der Bedingungen für die Betriebsarten a) und b) erfüllt ist.

2. Verfahren nach Anspruch 1 , **dadurch gekennzeichnet,** daß in den Fahrzeuginnenraum in der Betriebsart a) ausschließlich Außenluft und in einer der Betriebsarten b) und c) zumindest teilweise Umluft eingeleitet wird.

3. Verfahren nach einem der Ansprüche 1 und 2 , **dadurch gekennzeichnet,** daß der Betrieb der Klimaanlage abgeschaltet wird, wenn das Fahrzeug nach Ablauf einer bestimmten Dauer immer noch abgestellt ist.

4. Verfahren nach einem der vorangehenden Ansprüche, **dadurch gekennzeichnet,** daß der Ventilator in den Betriebsarten a) und b) mit einer ersten Drehzahl (II) und in der Betriebsart c) mit einer zweiten Drehzahl (I) angetrieben wird, die kleiner als die erste Drehzahl ist.

5. Verfahren nach einem der vorangehenden Ansprüche, **dadurch gekennzeichnet,** daß die besagte Grenzabweichung etwa 3°C beträgt.

6. Verfahren nach einem der vorangehenden Ansprüche, **dadurch gekennzeichnet,** daß der besagte Schwellenwert etwa 25°C beträgt.

7. Vorrichtung für die Anwendung des Verfahrens nach einem der vorangehenden Ansprüche, mit einer Klimaanlage (1), die einen Kältemittelkompressor (6), einen Ventilator (3) und einen Verdampfer (4) umfaßt, sowie mit einem Innentemperaturfühler, einem Außentemperaturfühler und Steuermitteln (11, 13, 14) zur Steuerung des Ventilators und des Kompressors in Abhängigkeit von den durch die besagten Fühler gelieferten Signalen, um die besagten Betriebsarten a), b) und c) herbeizuführen.

8. Vorrichtung nach Anspruch 7 , **dadurch gekennzeichnet,** daß sie mindestens eine Umluftklappe umfaßt, die durch die Steuermittel so verstellt werden kann, daß entweder ausschließlich Außenluft oder zumindest teilweise Umluft in den Fahrzeuginnenraum geleitet wird.

9. Vorrichtung nach einem der Ansprüche 7 und 8, **dadurch gekennzeichnet,** daß sie Zeitschaltmittel umfaßt, um den Betrieb der Klimaanlage nach Ablauf einer bestimmten Dauer im Anschluß an ihre Einschaltung automatisch abzuschalten.

10. Vorrichtung nach einem der Ansprüche 7 bis 9, **dadurch gekennzeichnet,** daß sie Programmiermittel umfaßt, um den Betrieb der Klimaanlage zu einer vorgewählten Uhrzeit einzuschalten.

11. Vorrichtung nach einem der Ansprüche 7 bis 10, **dadurch gekennzeichnet,** daß sie Fernbedienungsmittel umfaßt, um den Betrieb der Klimaanlage aus einer räumlichen Entfernung einzuschalten.

12. Vorrichtung nach einem der Ansprüche 7 bis 11, **dadurch gekennzeichnet,** daß sie einen mit niedriger Spannung betriebenen Motor für den Antrieb des Ventilators und einen mit hoher Spannung betriebenen Motor (7) für den Antrieb des Kompressors umfaßt.

13. Vorrichtung nach einem der Ansprüche 7 bis 12, **dadurch gekennzeichnet,** daß sie in einem Elektrofahrzeug installiert ist und daß der Motor des Kompressors von der Fahrbatterie aus gespeist wird.
